# EUROPÄISCHE PATENTSCHRIFT

(11) **EP 1 101 589 B1**
(45) Veröffentlichungstag und Bekanntmachung des Hinweises auf die Patenterteilung: **07.01.2004**
(21) Anmeldenummer: 00121328.9
(22) Anmeldetag: 09.10.2000
(51) Int. Cl.: B29C 44/12

(54) **Polsterteil, insbesondere für einen Kraftfahrzeugsitz, sowie Verfahren zu seiner Herstellung**
Cushion element especially for a car seat as well as method for its production
Coussin pour un siège de voiture et la méthode pour sa production

(30) Priorität: 17.11.1999 DE 19955159
(43) Veröffentlichungstag der Anmeldung: 23.05.2001
(73) Patentinhaber: Johnson Controls GmbH, 51399 Burscheid (DE)
(72) Erfinder: Stoschek, Olaf, 96317 Kronach (DE)
(74) Vertreter: Kutzenberger, Helga, Dr.

(56) Entgegenhaltungen:
- DE-A- 19 636 814
- GB-A- 1 439 739
- GB-A- 2 053 774
- PATENT ABSTRACTS OF JAPAN vol. 008, no. 050 (M-281), 7. März 1984 (1984-03-07) -& JP 58 203026 A (TOYO GOMU KAGAKU KOGYO KK), 26. November 1983 (1983-11-26)

## Beschreibung

Die vorliegende Erfindung betrifft ein Polsterteil, insbesondere für einen Fahrzeugsitz, mit einem Schaumkörper, wobei in dem Polsterteil ein längliches Versteifungsprofil eingebettet ist, und das Versteifungsprofil in einem Randbereich einer Aussenkante des Schaumkörpers angeordnet ist. Des Weiteren betrifft die vorliegende Erfindung ein Verfahren, das insbesondere dazu geeignet ist, ein solches Polsterteil herzustellen.

Ein Polsterteil für einen Fahrzeugsitz, das aus einem Schaumkörper und länglichen Versteifungsprofilen besteht, ist aus der DE-A-196 36 814 bekannt. Die Versteifungsprofile sind durch bodenseitige Aussparungen eines Formteils zugänglich, so dass sie zur Verbindung mit einem Unterbau dienen können. Jedes Versteifungsprofil besteht aus einem flexiblen Faserwerkstoff, der durch ein ausgehärtetes Tränkungsmittel stabilisiert wird. Auf diese Weise bilden die Versteifungsprofile einen starren Rahmen, der die mechanische Belastbarkeit des Formteils wesentlich erhöht.

Bei Polsterteilen werden der Forderung nach hoher Sicherheit und Komfort folgend im Fahrzeugbereich, insbesondere bei der Herstellung von Sitzpolstern (Rückenlehnen, Armlehnen, Kopfstützen usw.) seit langem Schaumkörper aus Polyurethan-Weichschäumen eingesetzt. Dabei kann eine grundsätzliche Unterscheidung zwischen kontinuierlich gefertigten Blockschaumstoffen und diskontinuierlich gefertigten Formschaumstoffen getroffen werden. Durch die Schaumstoffe können Schwingungen in optimaler Weise gedämpft werden und hinsichtlich der Sicherheit kann durch eine entsprechende Formgestaltung der Sitzpolster bzw. der polsterteile der menschlichen Anatomie in adäquater Weise Rechnung getragen werden. Bei Polsterteilen von Möbeln und/oder Fahrzeugsitzen liegt dabei die Rohdichte üblicherweise in einem Bereich von etwa 25 bis 65 kg/m³. Insbesondere wird als Richtwert für eine gute Polsterung eines Kraftfahrzeug-Sitzes mittels eines Polyurethan-Weichschaumes eine Rohdichte im Bereich von etwa 45-55 kg/m³ angesehen. Hierbei ist es für verschiedene Anwendungszwecke auch bekannt, ein oder mehrere Einleger unterschiedlichster Art und Funktion - beispielsweise als Befestigungselemente für Bezüge, wie in der DE 44 46 450 C1 beschrieben - in die Schäume einzubetten. Die vorliegende Erfindung bezieht sich insbesondere auf das zweitgenannte Gebiet der Formschaumstoffe; eine Anwendung auf Blockschaumstoffe, die dann zu Polsterteilen der gewünschten Form zugeschnitten werden können, erscheint jedoch ebenfalls möglich.

Polyurethan-Schäume werden bekanntermaßen durch Polykondensation aus Polyolen (Polyether oder Polyester) und Isocyanaten, die miteinander vermischt werden, hergestellt. Je nach Reaktivität der Rohstoffe reagiert das Gemisch dann, z.B., wenn es in eine Form eingebracht wird, entweder ohne äußere Wärmezufuhr in wenigen Minuten aus, oder es ist notwendig, den Schaum in der Form zur vollständigen Vernetzung anzuheizen. Unter Berücksichtigung dieser beiden Verfahrensweisen spricht man von Kaltschaum (KS) bzw. Heißschaum (HS). Im angelsächsischen Sprachgebrauch hat sich für Kaltschaum auch der Begriff HR-Schaum (HR - high resilent) eingeführt. Gegenwärtig werden HR-Schäume vornehmlich als Blockschäume gefertigt. Ihre Federungskurve ist mit derjenigen von Latex-Schäumen vergleichbar. Da jedoch ihr Druckverformungsrest weniger gut ausgeprägt ist, werden diese Schäume überwiegend für leger-knautschige Polstermöbel verwendet.

Heißschaum hat den Vorteil, daß man relativ niedrige Raumgewichte (Rohdichten) fertigen kann, so daß die Fertigung von Schäumen bis zu einer Rohdichte von etwa 32 kg/m³ heute problemlos möglich ist. Ein solches Material besitzt ausgezeichnete Dämpfungseigenschaften und wird hauptsächlich bei Rücksitzen von Personenkraftwagen eingesetzt. Flexible Einleger lassen sich sauber und problemlos einarbeiten. Allerdings treten dabei auch Nachteile auf, die bei der oft stundenlangen Benutzung der Sitze sichtbar werden. Dies ist insbesondere ein sogenannter "müder" Schaum, der nach einer Deformation nur geringe Rückstellkräfte entwickelt und werkstofftechnisch durch einen hohen Druckverformungsrest gekennzeichnet ist. Des weiteren kommt es in einer Form bei der Herstellung eines Heißschaums an der Oberfläche des Schaumkörpers zur Ausbildung einer vollständig geschlossenen Haut, wodurch später eine Luftzirkulation in dem herzustellenden Polsterteil verhindert oder zumindest stark eingeschränkt ist. Heißschaumformen sind so aufgebaut, daß die Innenluft schnell und gezielt durch Öffnungen in der Wandung der Form entweichen kann. Der Schaum steigt bei seiner Herstellung in der Form langsam auf. Das Verfahren ist nachteiligerweise nur mit vergleichsweise hohem Energieverbrauch realisierbar.

Die Vorteile des Kaltschaums bestehen neben dem Vorliegen eines stark ausgeprägten Polstereffektes in einer langzeitlich nur sehr geringen Abnahme der Gebrauchstüchtigkeit und in einer relativ guten Luftdurchlässigkeit. Die durch die Ausgangsstoffe bei der Reaktion entstehende hohe Enthalpie gestattet es, den Schaum ohne - bzw. zumindest ohne eine vergleichsweise erhebliche - Energiezufuhr zu produzieren. Die Formen für die Kaltverschäumung sind dicht verschlossen, und somit kann keine Luft entweichen; es wird gegen einen konstanten Innendruck gefahren. Die auf diese Weise im Schaum entstehenden geschlossenen Poren müssen nach dem Schäumvorgang aufgebrochen werden. Bei der Einbettung von Einlegern in Kaltschäume treten teilweise Probleme auf.

Insbesondere hat sich dabei die Umschäumung von flexiblen "luftaufnahmefähigen" Einlegern als problematisch erwiesen, da an kantennahen Zonen der Einleger Lufteinschlüsse entstehen, wodurch wiederum der Aufwand zur Nachbearbeitung ansteigt.

In Fahrzeugen mit geteilter Rückenlehne lässt sich z. B. ein Sitzteil samt der dazugehörigen Rückenlehne zum Zwecke der Erweiterung des Laderaums klappen. Der Rest der Rücksitzbank wird von einem Fahrzeuginsassen belegt. Speziell dabei tritt durch das Wegklappen des einen Sitzkissens das Problem auf, dass das verbleibende Sitzkissen seine Abstützstabilität verliert. Hierdurch kann eine Deformation des Sitzkissens auftreten, die sich unangenehm auf den Fahrzeuginsassen auswirkt.

Der Erfindung liegt die Aufgabe zu Grunde, in fertigungstechnisch möglichst aufwandsarmer Weise unter Minimierung der bei der Heiß- und Kaltschaumherstellung auftretenden möglichen Probleme ein Polsterteil der eingangs genannten Art zu schaffen, das neben den geforderten Dämpfungseigenschaften eine hohe Formstabilität aufweist und einen hohen Komfort für seinen Benutzer bietet.

Erfindungsgemäß wird dies dadurch erreicht, dass das Versteifungsprofil aus einem Schaumgrundkörper besteht, in dem ein grobmaschiges Trägerprofil eingebettet ist, wobei das Versteifungsprofil flexibel ausgebildet ist. Ein solches Versteifungsprofil lässt sich in das Schaumpolster in fertigungstechnisch einfacher Weise einarbeiten, in dem es z. B. in einer Form fixiert und umschäumt wird. Zur Erhöhung der Formstabilität des Polsterteils ist es dabei von besonderem Vorteil, dass das flexible Versteifungsprofil - bzw. beim Vorhandensein mehrerer Versteifungsprofile mindestens eines davon - in einem Randbereich des Schaumkörpers angeordnet ist.

Das Versteifungsprofil ist dabei im Bereich einer, insbesondere konvexen, Außenkante -, vorzugsweise jeweils in einem Abstand von 3 bis 25 mm, insbesondere von 7 bis 15 mm, von den die Kante bildenden Flächen angeordnet.
Dies bietet sich z.B.. in einem Kraftfahrzeug bei einem relativ schmalen Sitz und Arm- oder Rückenlehnenseiten an, die in sich instabil sind, da dadurch die Kantenstabilität wirkungsvoll erhöht wird.

Das Versteifungsprofil besteht aus einem, vorzugsweise aus einem mit Polyurethan umschäumten, grobmaschigen Trägerprofil insbesondere einem textilen Flächengebilde, bestehen. Ein solcher Einleger gewährleistet hinsichtlich der Dämpfungseigenschaften des erfindungsgemäßen Polsterteils eine ungeminderte und hinsichtlich der Formstabilität und Optik verbesserte Funktion und ist unter dem Aspekt der Fertigung sehr kostengünstig, da nach dem Verschäumen des Polsters nur eine äußerst reduzierte Notwendigkeit zur Nacharbeit besteht. Nach diesem Umschäumen tritt vorteilhafterweise eine - auch bei Belastung und Deformation des erfindungsgemäßen Polsterteiles - äußerst haltbare Verbindung des Versteifungsprofils mit dem Schaumkörper ein.

In bevorzugter Ausführung kann dabei der Schaumkörper aus einem Polyurethan-Kaltschaum bestehen, der z.B. durch Polykondensation eines Polyethers mit einem Gemisch aus Diphenylmethandiisocyanat (MDI) und Toluendiisocyanat (TDI) herstellbar ist. Neben der energieökonomischen Herstellungsweise zeichnet sich ein solches erfindungsgemäßes Polsterteil aufgrund einer noch weiter verbesserten Elastizität durch ein besonders gutes Rückstellvermögen und eine langzeitlich minimale Ermüdung aus.

Der Schaumkörper kann allerdings auch aus einem Polyurethan-Heißschaum bestehen, der z.B. durch Polykondensation eines Polyethers mit Toluendiisocyanat (TDI) herstellbar ist, wobei die o.g. Vorteile des Heißschaumeinsatzes zum Tragen kommen können.

Das erfindungsgemäße Verfahren zur Herstellung eines Polsterteils, insbesondere für einen Fahrzeugsitz, bestehend aus einem Schaumkörper, vorzugsweise zur Herstellung eines erfindungsgemäßen Polsterteils, zeichnet sich dadurch aus, daß ein Versteifungsprofil an mindestens einem Befestigungshalter eingeklemmt wird, der in einem erfindungsgemäßen Formwerkzeug vorzugsweise am Boden einer Verschäumungsform angeordnet ist, und anschließend verschäumt wird. Durch die erfindungsgemäße Fertigung des Polsterteiles als Formteil und die Positionierung des Versteifungsprofils in der Verschäumungsform mittels des Befestigfungshalters entfällt dabei vorteilhafterweise einerseits die Notwendigkeit eines nachträglichen Zuschnitts des Polsterteiles und andererseits besteht die Möglichkeit, das Versteifungsprofil von vornherein maßgerecht an der für ihn im Polsterteil vorgesehenen Stelle allseitig gleichmäßig einzuschäumen. Das Polsterteil läßt sich nach dem Verschäumen bei entsprechender Sorgfalt problemlos sauber entformen. Im Schaumkörper des Polsterteils verbleiben dabei charakteristische, durch das Umschäumen der Befestigungshalter hervorgerufene Schlitze, die am Fertigteil jedoch nicht störend wirken.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels wird im folgenden die Erfindung näher erläutert. Dabei zeigen:
- Fig. 1: in perspektivischer, teilweiser Explosionsdarstellung, erfindungsgemäße Polsterteile in einem Fahrzeugsitz,
- Fig. 2: vergrößert gegenüber Fig. 1, ein erfindungsgemäßes Polsterteil im Querschnitt gemäß der Ansicht II-II in Fig. 1,
- Fig. 3: ebenfalls im Querschnitt und der Darstellung in Fig. 2 entsprechend, jedoch in noch stärkerer Vergrößerung, eine bevorzugte Ausführung eines erfindungsgemäß vorgesehenen Versteifungsprofils,
- Fig. 4 und 5: in perspektivischer, teilweiser Explosionsdarstellung, zwei weitere Ausführungen erfindungsgemäßer Polsterteile in einem Fahrzeugsitz.

In den verschiedenen Figuren der Zeichnung sind gleiche Teile stets mit den gleichen Bezugszeichen versehen und werden daher in der Regel auch jeweils nur einmal beschrieben.

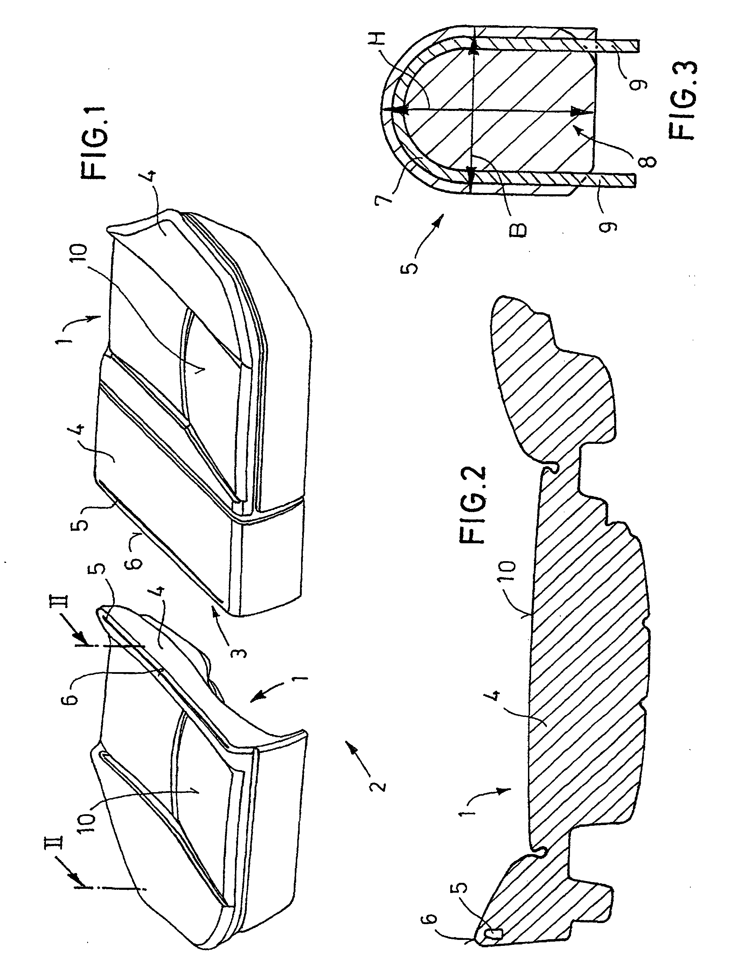

Erfindungsgemäße Polsterteile können beispielsweise Bestandteile von Sitz- oder Liegemöbeln oder insbesondere Bestandteile eines Fahrzeugsitzes sein. So sind in der exemplarischen Darstellung von Fig. 1 zwei Sitzteile 1 einer Rücksitzbank 2 eines Kraftfahrzeuges als erfindungsgemäße Polsterteile ausgebildet. Zwischen den beiden Sitzteilen 1 befindet sich ein weiteres Polsterteil 3 in der Rücksitzbank 2, das aus einer in Fig. 1 dargestellten Lage, in der es sich in der Sitzebene befindet, herausgeklappt bzw. ganz entfernt werden kann, wodurch in der Sitzebene ein Zwischenraum zwischen den beiden Sitzteilen 1 verbleibt. Auch dieses Polsterteil 3 kann - wie dargestellt - als erfindungsgemäßes Polsterteil ausgebildet sein.

Die erfindungsgemäß ausgebildeten Teile (Sitzteile 1, Polsterteil 3) bestehen jeweils aus einem Schaumkörper 4, bei dem in einen Randbereich mindestens ein längliches Versteifungsprofil 5 eingebettet ist. Wie Fig. 1 veranschaulicht, ist die Längenabmessung des Versteifungsprofils 5 größer, vorzugsweise um ein Vielfaches größer, als es die Abmessungen des Querschnitts des Versteifungsprofils 5 sind. In Fig. 1 ist das Versteifungsprofil 5 nur schematisch angedeutet, während den Querschnittsdarstellungen in Fig. 2 und 3 weitere Details zu entnehmen sind.

Das Versteifungsprofil 5 ist jeweils im Bereich einer (konvexen) Kante 6 des Schaumkörpers 4, vorzugsweise jeweils in einem (nicht näher bezeichneten) Abstand von 3 bis 25 mm, insbesondere von 7 bis 15 mm, von den die Kante 5 bildenden Flächen angeordnet. Dadurch kommt einerseits seine formstabilisierende Wirkung angemessen zur Geltung, andererseits ist das Versteifungsprofil 5 aber auch durch seine Umschäumung ausreichend fest in den Schaumkörper 4 eingebunden.

Obwohl auch eine Fertigung aus Heißschaum möglich ist, kann der Schaumkörper 4 kann mit Vorteil aus einem Polyurethan-Kaltschaum bestehen. Ein solcher Schaum hat - wie bereits erwähnt - einen stark ausgeprägten Polstereffekt mit langzeitlich nur sehr geringer Abnahme seines Rückstellvermögens und besitzt eine relativ gute Luftdurchlässigkeit. Insbesondere kann der Schaumkörper 4 aus einem Polyurethan-Weichschaum bestehen und vorzugsweise eine Rohdichte von etwa 25 bis 65 kg/m³, insbesondere von etwa 28 bis 42 kg/m³, aufweisen.

Die Herstellung des Schaums kann in energieoptimaler Weise im sogenannten "One-Shot"-Verfahren durch Mischen, Polykondensation und Verschäumung mindestens eines Polyethers mit einem Isocyanat, insbesondere mit Toluendiisocyanat, bei gleichzeitigem Einsatz von Katalysatoren und Schaumstabilisatoren erfolgen. Als Polyol kann mit Vorteil anstelle des Polyethers oder mit diesem zusammen zur Herstellung des Schaumkörpers 4 aber auch mindestens ein Polyester und als Isocyanat kann - alternativ oder im Gemisch - z.B. Diphenylmethandiisocyanat eingesetzt werden.

Als Werkstoffe für das Versteifungsprofil 5 können unterschiedliche, insbesondere nichtmetallische Materialien dienen. Es hat sich jedoch als besonders vorteilhaft erwiesen, wenn das Versteifungsprofil 5 - wie in Fig. 3 dargestellt - aus einem umschäumten, vorzugsweise mit Polyurethan umschäumten, grobmaschigen Trägerprofil 7 besteht, wobei letzteres vorzugsweise aus einem textilen Flächengebilde bestehen kann. Ein solches Versteifungsprofil 5, das demnach aus einem Schaumgrundkörper 8, in den das Trägerprofil 7 eingebettet ist, besteht, besitzt vorteilhafterweise selbst eine mehr oder weniger stark ausgeprägte Polsterwirkung und geht aufgrund des ähnlichen chemischen Aufbaus und der mechanischen Beschaffenheit (z.B. der porigen Oberfläche) wie der Schaumkörper 4 des erfindungsgemäßen Polsterteiles leicht eine feste stoffschlüssige Verbindung mit dem Schaumkörper 4 ein. Der Schaumgrundkörper 8 des Versteifungsteils 5 kann dabei auf die gleiche Weise hergestellt werden, wie dies vorstehend für den Schaum des Schaumkörpers 4 beschrieben ist.

Dabei sollte der Schaum des Schaumgrundkörpers 8 des Versteifungsteils 5 aber eine höhere Rohdichte aufweisen als der des Schaumkörpers 4 des Polsterteils, womit auch eine höhere Härte und Biegesteifigkeit verbunden ist. Vornehmlich haben sich unter diesem Gesichtspunkt Rohdichtewerte im Bereich von etwa 75 bis 100 kg/m³ als optimal erwiesen.

Das textile Flächengebilde des Trägerprofils 7 kann in Form eines Gewebes oder eines Vlieses vorliegen und beispielsweise aus einem Kunststoff, aber auch aus natürlichen Fasern, bestehen. Für eine gute Penetration des Schaumes und Einbindung des Profils in den Schaumgrundkörper 8 ist es dabei von Vorteil, wenn das textile Flächengebilde ein Flächengewicht von etwa 50 bis 100 g/m², vorzugsweise von etwa 65 bis 85 g/m² aufweist.

Hervorragende Ergebnisse wurden mit einem Polyurethan-Kaltschaum einer Rohdichte von 85 bis 90 kg/m³ erreicht, in den als Trägerprofil 7 ein Polypropylen-Gewebe mit einem Flächengewicht von ca. 75 g/m² eingebettet wurde. Als Schäumkomponenten des Schaums wurden dabei Bayfit PU20WF62 Bayer (Polyol) und Desmodur PU 3230 Bayer (Isocyanat) eingesetzt, die unter Druck (etwa 3,5 ± 0,5 bar) bei Raumtemperatur (19 bis 25 °C) in einem Verhältnis von 2 : 1 in einen Mischkopf eingebracht, dort unter Rühren bei einer Geschwindigkeit von etwa 8000 U/min miteinander vermischt wurden und danach in einer Endlosform, der auch das Trägerprofil 7 (als etwa 20 bis 40 mm breites und etwa 0,2 bis 1,0 mm dickes Band) kontinuierlich zugeführt wurde, verschäumt wurden. Das textile Flächengebilde war dabei, zumindest bereichsweise, in einer - hinsichtlich der Stabilität des Versteifungsprofils 5 und der Einbindung des Trägerprofils 7 günstigen Weise - in einem Randbereich des Versteifungsprofils 5 und im Querschnitt des Versteifungsprofils 5 gesehen U-förmig angeordnet, wie dies Fig. 3 zeigt. Die Enden 9 der U-Schenkel standen aus der Umschäumung (Schaumgrundkörper 8) hervor. Nach der Einbettung des Versteifungsprofils 7 in den Schaumkörper 4 des Polsterteils entfalten diese Enden 9 vorteilhafterweise eine zusätzliche Verbindungs- und Armierungswirkung. Die Grundabmessungen (Höhe H, Breite B) des etwa rechteckigen, jedoch Verrundungen aufweisenden Querschnitts des Schaumgrundkörpers 8 des Versteifungsprofils 5 lagen etwa im Bereich von 5 bis 15 mm.

Zur Herstellung des erfindungsgemäßen Polsterteils wurde dann das Versteifungsprofil 7 an mindestens einem, vorzugsweise an mehreren, in einer mindestens eine Seitenwandung und einen Boden, gegebenefalls einen Deckel aufweisenden Verschäumungsform, insbesondere an deren Boden, angeordneten Befestigungshalter(n) eingeklemmt und anschließend in bekannter Weise verschäumt. Anschließend konnte das Entformen des Fertigteils durch die vorzugsweise Anordung der Befestigungshalter am Boden und die Klemmbefestigung mühelos und sauber vorgenommen werden. Dadurch, daß ein Befestigungshalter etwa eine Breite im Bereich von 1,0 bis 2,0 mm, insbesondere von 1,5 mm aufwies, verblieb nach dem Entformen des erfindungsgemäßen Polsterteils an der Befestigungsstelle jeweils ein offener Schlitz im Schaumkörper 4, insbesondere an dessen A-Fläche (Sitzfläche 10), der am Fertigteil aber nicht störend wirkt.

Zur Feststellung, ob sich das Versteifungsprofil 5 aus dem Schaumkörper 4 löst oder sich möglicherweise bleibend verformt, wurde das solchermaßen hergestellte erfindungsgemäße Polsterteil einem Dauerschwingtest nach DIN/EN/ISO 3385 mit folgenden Parametern unterzogen:
Prüfart: Kraftprüfung
minimale Kraft: 0 N
maximale Kraft: 750 N
Frequenz: 1,17 Hz
Stempelform: flach/rund
Klimabedingungen: 23 °C und 50 % relative Luftfeuchte (Normalklima)
Stempelausrüstung: plan auf der Kantenoberfläche der Teile
Prüfstelle:
   x-Achse: zentriert im Mittelteil
   y-Achse: zentriert an beiden Seiten
Prüfunterlage: formschlüssig

Dabei zeigten sich noch bei einer Hubanzahl von 80 000 keine negativen Veränderungen.

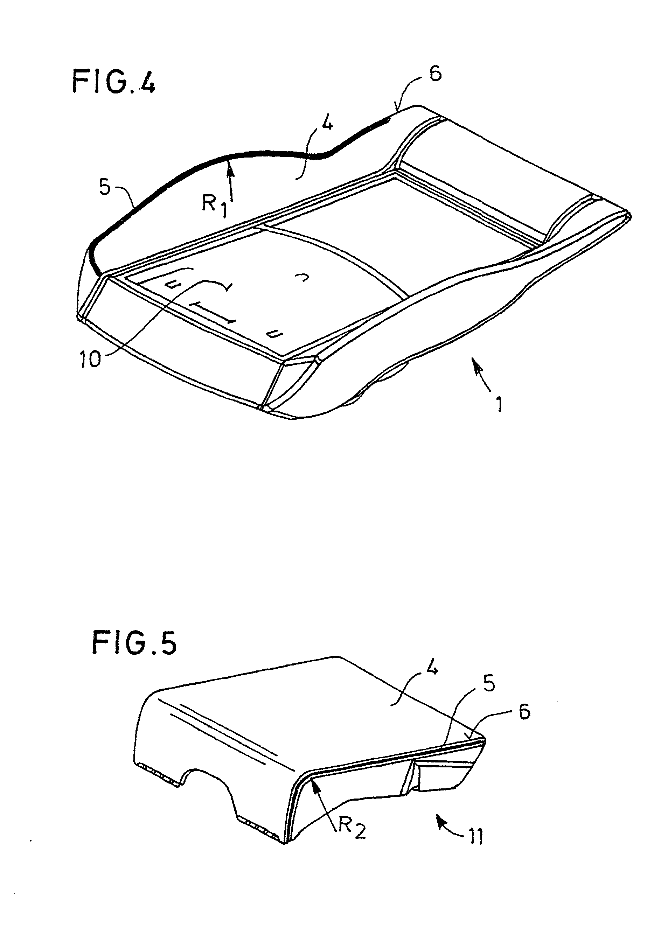

Fig. 4 und 5 zeigen zwei weitere Ausführungen von Sitzteilen 1, 11 eines Kraftfahrzeugs die als erfindungsgemäße Polsterteile ausgebildet sind. Fig. 4 zeigt dabei insbesondere das Polsterteil eines Fahrersitzes und Fig. 5 das Polsterteil einer in einen Fahrzeugsitz integrierbaren Kindersitzauflage 11.

An diesen Ausführungsbeispielen wird ein weiterer Vorteil der Erfindung deutlich. Da das Versteifungsprofil 5 mit hoher Flexibilität ausgebildet werden kann, ist es möglich, daß das Versteifungsprofil 5 in dem Schaumkörper 4 der Kontur der Kanten 6 folgend nicht nur in Bögen mit relativ großen Radien (R₁ in Fig. 4), sondern auch in Bögen mit kleinen Radien (R₂ in Fig. 5) angeordnet sein kann, ohne daß dazu eine spezielle Bearbeitung, beispielsweise ein Kerben oder Einschneiden, notwendig wäre. Große Radien R₁ (> 20 mm) sind von Vorteil im Hinblick auf die Montage in Verbindung mit der Geschwindigkeit der Anlage, es können aber auch problemlos Radien R₂ von etwa 15 bis 18 mm realisiert werden, wie dies das Beispiel der Kindersitzauflage 11 zeigt.

Wenngleich die Ausführungsart gemäß den vorstehend dargestellten Beispielen besonders bevorzugt ist, so ist die vorliegende Erfindung doch nicht auf diese Ausführungsbeispiele beschränkt, sondern umfaßt auch alle im Sinne der Erfindung gleichwirkenden Ausführungen. So kann die Versteifungseinlage 7 hinsichtlich Material und Geometrie andersartig ausgeführt sein als dargestellt - beispielsweise nicht als Verbundkörper, sondern aus einem einheitlichen Material, und - abweichend von der dargestellten Querschnittsform - z.B. auch mit ring- oder kreuzförmigem, oder einem anderen Querschnitt.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1: Sitzteil
- 2: Rücksitzbank
- 3: Polsterteil
- 4: Schaumkörper von 1 bzw. 3
- 5: Versteifungsprofil in 4
- 6: (konvexe) Kante von 4
- 7: Trägerprofil von 5
- 8: Schaumgrundkörper von 5
- 9: U-Enden von 7
- 10: Sitzfläche (A-Fläche) von 1
- 11: Kindersitzauflage

- B: Breite von 5
- H: Höhe von 5
- R₁: großer Radius von 5
- R₂: kleiner Radius von 5

## Patentansprüche

1. Polsterteil (1, 3, 11), insbesondere für einen Fahrzeugsitz, mit einem Schaumkörper (4), wobei in dem Polsterteil (1, 3, 11) ein längliches Versteifungsprofil (5) eingebettet ist, und das Versteifungsprofil (5) in einem Randbereich einer Aussenkante (6) des Schaumkörpers (4) angeordnet ist,
**dadurch gekennzeichnet,**
**dass** das Versteifungsprofil (5) aus einem Schaumgrundkörper (8) besteht, in dem ein grobmaschiges Trägerprofil (7) eingebettet ist, wobei das Versteifungsprofil (5) flexibel ausgebildet ist.

2. Polsterteil nach Anspruch 1,
**dadurch gekennzeichnet, daß** das Versteifungsprofil (5) im Bereich der Außenkante (6) des Schaumkörpers (4), in einem Abstand von 3 bis 25 mm, insbesondere von 7 bis 15 mm, von den die Kante (6) bildenden Flächen angeordnet ist.

3. Polsterteil nach Anspruch 1 oder 2,
**dadurch gekennzeichnet, daß** die Längenabmessung des Versteifungsprofils (5) größer, vorzugsweise um ein Vielfaches größer, ist, als es die Abmessungen des Querschnitts des Versteifungsprofils (5) sind.

4. Polsterteil nach einem der Ansprüche 1 bis 3,
**dadurch gekennzeichnet, daß** der Schaumkörper (4) aus einem Polyurethan-Weichschaum besteht und vorzugsweise eine Rohdichte von etwa 25 bis 65 kg/m³, insbesondere von etwa 28 bis 42 kg/m³, aufweist.

5. Polsterteil nach einem der Ansprüche 1 bis 4,
**dadurch gekennzeichnet, daß** das Versteifungsprofil (5) aus einem mit Polyurethan umschäumten Trägerprofil (7), vorzugsweise einem textilen Flächengebilde, besteht.

6. Polsterteil nach einem der Ansprüche 1 bis 5,
**dadurch gekennzeichnet, daß** der Schaumkörper (4) und/oder der Schaum, mit dem das Trägerprofil (7) umschäumt ist, aus einem Polyurethan-Kaltschaum besteht.

7. Polsterteil nach einem der Ansprüche 1 bis 5,
**dadurch gekennzeichnet, daß** der Schaumkörper (4) und/oder der Schaum, mit dem das Trägerprofil (7) umschäumt ist, aus einem Polyurethan-Heißschaum besteht.

8. Polsterteil nach einem der Ansprüche 1 bis 7,
**dadurch gekennzeichnet, daß** der Schaumkörper (4) und/oder der Schaum, mit dem das Trägerprofil (7) umschäumt ist, durch Mischen, Polykondensation und Verschäumung mindestens eines Polyethers und/oder Polyesters mit einem Isocyanat, insbesondere Toluendiisocyanat und/oder Diphenylmethandiisocyanat, hergestellt ist.

9. Polsterteil nach einem der Ansprüche 5 bis 8,
**dadurch gekennzeichnet, daß** der Schaum, mit dem das Trägerprofil (7) umschäumt ist, eine Rohdichte von etwa 75 bis 100 kg/m³, vorzugsweise von etwa 85 bis 90 kg/m³, aufweist.

10. Polsterteil nach einem der Ansprüche 5 bis 9,
**dadurch gekennzeichnet, daß** das textile Flächengebilde in Form eines Gewebes oder eines Vlieses vorliegt.

11. Polsterteil nach einem der Ansprüche 5 bis 10,
**dadurch gekennzeichnet, daß** das Trägerprofil (7) aus einem Kunststoff, insbesondere aus Polypropylen, besteht.

12. Polsterteil nach einem der Ansprüche 5 bis 11,
**dadurch gekennzeichnet, daß** das textile Flächengebilde ein Flächengewicht von etwa 50 bis 100 g/m², vorzugsweise von etwa 65 bis 85 g/m² aufweist.

13. Polsterteil nach einem der Ansprüche 5 bis 12,
**dadurch gekennzeichnet, daß** das Trägerprofil (7), mindestens bereichsweise, in mindestens einem Randbereich des Versteifungsprofils (5) angeordnet ist.

14. Polsterteil nach einem der Ansprüche 5 bis 13,
**dadurch gekennzeichnet, daß** das, insbesondere bandförmige, Trägerprofil (7) im Querschnitt des Versteifungsprofils (7) U-förmig angeordnet ist.

15. Polsterteil nach einem der Ansprüche 5 bis 14,
**dadurch gekennzeichnet, daß** das Trägerprofil (7) bereichsweise, insbesondere mit den Enden der U-Schenkel, aus seiner Umschäumung hervorsteht.

16. Verfahren zur Herstellung eines Polsterteils (1, 3, 11), bestehend aus einem Schaumkörper (4), insbesondere für einen Fahrzeugsitz, nach einem der Ansprüche 1 bis 15,
**dadurch gekennzeichnet, daß** das längliche Versteifungsprofil (5) an mindestens einem in einer Verschäumungsform angeordneten Befestigungshalter eingeklemmt und anschließend verschäumt wird.

17. Verfahren nach Anspruch 16,
**dadurch gekennzeichnet, daß** die Verschäumung im One-Shot-Verfahren erfolgt.

18. Verfahren nach Anspruch 16 oder 17,
**dadurch gekennzeichnet, daß** als Versteifungsprofil (7) ein umschäumtes, vorzugsweise mit Polyurethan umschäumtes, grobmaschiges Trägerprofil (7), vorzugsweise ein umschäumtes textiles Flächengebilde, eingesetzt wird.

19. Verfahren nach einem der Ansprüche 16 bis 18,
**dadurch gekennzeichnet, daß** die Verschäumungsform bei der Verschäumung durch einen Deckel dicht verschlossen ist und die Verschäumung unter Druck erfolgt.

## Claims

1. Cushion part (1, 3, 11), in particular for a vehicle seat, having a foam body (4), an elongate stiffening profile (5) being embedded in the cushion part (1, 3, 11), and the stiffening profile (5) being arranged in a border region of an outer edge (6) of the foam body (4), **characterized in that** the stiffening profile (5) consists of a foam basic body (8) in which a wide-meshed support profile (7) is embedded, the stiffening profile (5) being of flexible design.

2. Cushion part according to Claim 1, **characterized in that** the stiffening profile (5) is arranged in the region of the outer edge (6) of the foam body (4) at a distance of 3 to 25 mm, in particular 7 to 15 mm, from the surfaces forming the edge (6).

3. Cushion part according to Claim 1 or 2, **characterized in that** the linear dimension of the stiffening profile (5) is larger, preferably larger by a multiple, than the dimensions of the cross section of the stiffening profile (5) are.

4. Cushion part according to one of Claims 1 to 3, **characterized in that** the foam body (4) consists of a polyurethane flexible foam and preferably has a bulk density of approximately 25 to 65 kg/m³, in particular of approximately 28 to 42 kg/m³.

5. Cushion part according to one of Claims 1 to 4, **characterized in that** the stiffening profile (5) consists of a support profile (7) which is encapsulated with polyurethane, preferably of a textile sheet-like structure.

6. Cushion part according to one of Claims 1 to 5, **characterized in that** the foam body (4) and/or the foam with which the support profile (7) is encapsulated consists of a polyurethane cold foam.

7. Cushion part according to one of Claims 1 to 5, **characterized in that** the foam body (4) and/or the foam with which the support profile (7) is encapsulated consists of a polyurethane hot foam.

8. Cushion part according to one of Claims 1 to 7, **characterized in that** the foam body (4) and/or the foam with which the support profile (7) is encapsulated is produced by mixing, polycondensation and foaming of at least one polyether and/or polyester with an isocyanate, in particular toluene diisocyanate and/or diphenylmethane diisocyanate.

9. Cushion part according to one of Claims 5 to 8, **characterized in that** the foam with which the support profile (7) is encapsulated has a bulk density of approximately 75 to 100 kg/m³, preferably of approximately 85 to 90 kg/m³.

10. Cushion part according to one of Claims 5 to 9, **characterized in that** the textile sheet-like structure is in the form of a woven or a nonwoven.

11. Cushion part according to one of Claims 5 to 10, **characterized in that** the support profile (7) consists of a plastic, in particular of polypropylene.

12. Cushion part according to one of Claims 5 to 11, **characterized in that** the textile sheet-like structure has a basis weight of approximately 50 to 100 g/m², preferably of approximately 65 to 85 g/m².

13. Cushion part according to one of Claims 5 to 12, **characterized in that** the support profile (7) is arranged, at least in some regions, in at least one border region of the stiffening profile (5).

14. Cushion part according to one of Claims 5 to 13, **characterized in that** the support profile (7), which in particular is in the form of a band, is arranged in a U-shaped manner in the cross section of the stiffening profile (5).

15. Cushion part according to one of Claims 5 to 14, **characterized in that** the support profile (7) protrudes in some regions, in particular with the ends of the U-limbs, from its foam encapsulation.

16. Method for producing a cushion part (1, 3, 11), comprising a foam body (4), in particular for a vehicle seat, according to one of Claims 1 to 15, **characterized in that** the elongate stiffening profile (5) is clamped to at least one fastening holder arranged in a foaming mould and is subsequently foamed.

17. Method according to Claim 16, **characterized in that** the foaming takes place in the one-shot method.

18. Method according to Claim 16 or 17, **characterized in that** a wide-meshed support profile (7) which is encapsulated with foam, and is preferably encapsulated with polyurethane, preferably a textile sheet-like structure which is encapsulated with foam, is used as stiffening profile (7).

19. Method according to one of Claims 16 to 18, **characterized in that** the foaming mould is tightly closed by a cover during the foaming, and the foaming takes place under pressure.

## Revendications

1. Partie de coussin (1, 3, 11), notamment pour un siège de véhicule, comprenant un corps en mousse (4), un profilé de renforcement (5) étant encastré dans la partie de coussin (1, 3, 11) et le profilé de renforcement (5) étant disposé dans une partie marginale d'une arête extérieure (6) du corps en mousse (4),
**caractérisée en ce que**
le profilé de renforcement (5) se compose d'un corps de base en mousse (8) dans lequel est encastré un profilé de support (7) à mailles grossières, le profilé de renforcement (5) étant réalisé de manière flexible.

2. Partie de coussin selon la revendication 1,
**caractérisée en ce que**
le profilé de renforcement (5) est disposé dans la région de l'arête extérieure (6) du corps en mousse (4), à une distance de 3 à 25 mm, en particulier de 7 à 15 mm des faces formant l'arête (6) .

3. Partie de coussin selon la revendication 1 ou 2,
**caractérisée en ce que**
les dimensions en longueur du profilé de renforcement (5) sont plus grandes, de préférence d'un multiple, que les dimensions de la section transversale du profilé de renforcement (5).

4. Partie de coussin selon l'une quelconque des revendications 1 à 3,
**caractérisée en ce que**
le corps en mousse (4) se compose d'une mousse souple de polyuréthanne, et présente de préférence une densité brute d'environ 25 à 65 kg/m³, en particulier d'environ 28 à 42 kg/m³.

5. Partie de coussin selon l'une quelconque des revendications 1 à 4,
**caractérisée en ce que**
le profilé de renforcement (5) se compose d'un profilé de support (7) enrobé de mousse de polyuréthanne, de préférence une structure en nappe textile.

6. Partie de coussin selon l'une quelconque des revendications 1 à 5,
**caractérisée en ce que**
le corps en mousse (4) et/ou la mousse avec laquelle le profilé de support (7) est enrobé, se compose d'une mousse à froid de polyuréthanne.

7. Partie de coussin selon l'une quelconque des revendications 1 à 5,
**caractérisée en ce que**
le corps en mousse (4) et/ou la mousse avec laquelle le profilé de support (7) est enrobé, se compose d'une mousse à chaud de polyuréthanne.

8. Partie de coussin selon l'une quelconque des revendications 1 à 7,
**caractérisée en ce que**
le corps en mousse (4) et/ou la mousse avec laquelle le profilé de support (7) est enrobé, est préparée par mélange, polycondensation et moussage d'au moins un polyéther et/ou d'un polyester avec un isocyanate, en particulier du diisocyanate de toluène et/ou du diisocyanate de diphénylméthane.

9. Partie de coussin selon l'une quelconque des revendications 5 à 8,
**caractérisée en ce que**
la mousse avec laquelle le profilé de support (7) est enrobé, présente une densité brute d'environ 75 à 100 kg/m³, de préférence d'environ 85 à 90 kg/m³.

10. Partie de coussin selon l'une quelconque des revendications 5 à 9,
**caractérisée en ce que**
la structure en nappe textile se présente sous la forme d'un tissu ou d'un voile.

11. Partie de coussin selon l'une quelconque des revendications 5 à 10,
**caractérisée en ce que**
le profilé de support (7) se compose d'un plastique, en particulier de polypropylène.

12. Partie de coussin selon l'une quelconque des revendications 5 à 11,
**caractérisée en ce que**
la structure en nappe textile présente un grammage d'environ 50 à 100 g/m², de préférence d'environ 65 à 85 g/m².

13. Partie de coussin selon l'une quelconque des revendications 5 à 12,
**caractérisée en ce que**
le profilé de support (7) est disposé au moins en partie, dans au moins une région marginale du profilé de renforcement (5).

14. Partie de coussin selon l'une quelconque des revendications 5 à 13,
**caractérisée en ce que**
le profilé de support (7) notamment en forme de bande, est disposé en forme de U dans la section transversale du profilé de renforcement (7).

15. Partie de coussin selon l'une quelconque des revendications 5 à 14,
**caractérisée en ce que**
le profilé de support (7) dépasse en partie, en particulier avec les extrémités des branches du U, de son enrobage de mousse.

16. Procédé de fabrication d'une partie de coussin (1, 3, 11) se composant d'un corps en mousse (4), notamment pour un siège de véhicule, selon l'une quelconque des revendications 1 à 15,
**caractérisé en ce que** le profilé de renforcement longitudinal (5) est serré sur au moins un support de fixation disposé dans un moule de moussage, puis est moussé.

17. Procédé selon la revendication 16,
**caractérisé en ce que** le moussage s'effectue en un procédé en une seule passe.

18. Procédé selon la revendication 16 ou 17,
**caractérisé en ce que** l'on utilise comme profilé de renforcement (7) un profilé de support (7) à mailles grossières, enrobé de mousse, de préférence enrobé de mousse de polyuréthanne, de préférence une structure en nappe textile enrobée de mousse.

19. Procédé selon l'une quelconque des revendications 16 à 18,
**caractérisé en ce que** le moule de moussage est fermé de manière étanche par un couvercle lors du moussage, et le moussage s'effectue sous pression.
